# EUROPÄISCHE PATENTSCHRIFT

(11) **EP 2 167 806 B1**
(45) Veröffentlichungstag und Bekanntmachung des Hinweises auf die Patenterteilung: **12.10.2011**
(21) Anmeldenummer: 08714308.7
(22) Anmeldetag: 27.03.2008
(51) Int. Cl.: F02F 3/24, F16J 9/24

(54) **KOLBEN**
PISTON
PISTON

(30) Priorität: 06.07.2007 AT 492007; 12.10.2007 AT 16392007
(43) Veröffentlichungstag der Anmeldung: 31.03.2010
(73) Patentinhaber: Mahle König Kommanditgesellschaft GmbH & Co, 6830 Rankweil (AT)
(72) Erfinder: LANGNER, Karlheinz, A-2393 Sittendorf (AT); ULRICH, Reiner, 71287 Weissach (DE)
(74) Vertreter: Wildhack & Jellinek
(86) Internationale Anmeldenummer: PCT/AT2008/000112
(87) Internationale Veröffentlichungsnummer: WO 2009/006650

(56) Entgegenhaltungen:
- EP-A- 1 227 270
- WO-A-2007/031188
- DE-A1- 2 430 829
- DE-A1-102005 055 787
- GB-A- 1 285 471
- GB-A- 1 445 587
- JP-A- 2000 039 066
- JP-A- 2005 220 746
- US-A- 3 412 719
- US-A1- 2006 266 310

## Beschreibung

Die Erfindung betrifft einen Kolben gemäß dem Oberbegriff des Patentanspruches 1. Ferner betrifft die Erfindung einen Zylinder mit einem Kolben gemäß Anspruch 14. Ein Kolben dieser Bauart ist aus der GB 1285471 A bekannt.

Ziel der Erfindung ist die Erstellung eines Kolbens, der hohen Belastungen ohne Gefahr von Verreibungen ausgesetzt werden kann. Des weiteren sollen die Herstellung und der konstruktive Aufbau dieses Kolbens einfach sein. Des weiteren soll dieser Kolben für einen Einsatz bei Zweitaktmotoren geeignet sein und die entsprechend erforderlichen Öffnungen des Zylinders im Betrieb exakt verschließen und öffnen können. Diese Ziele werden bei einem Kolben der eingangs genannten Art mit den im Kennzeichen des Anspruches 1 angeführten Merkmalen erreicht.

Durch die zwischen den Schaftwänden ausgebildete Stützwand erfolgt eine exakte Führung, insbesondere der kolbenbodenfernen Endbereiche der Schaftwände und die Verreibungsgefahr wird ohne Beeinträchtigung der Funktion des Kolbens im Hinblick auf die Gemischdurchleitung herabgesetzt. Des weiteren ergibt sich durch die vorgesehenen Stützwände eine stabile Kolbenausbildung mit entsprechenden Festigkeitswerten. Damit kann der Kolben insgesamt leichter ausgebildet werden, und es ergeben sich Material- und Energieeinsparungen. In den beiden Aussparungen zwischen den einander gegenüberliegenden Schaftwänden ist mindestens jeweils eine Stützwand ausgebildet, welche die Schaftwände verbindet.

Es wird ein Kolben mit Kolbenring erstellt und es wird erreicht, dass der Kolbenring eine gute Anlage an der Zylinderinnenwandfläche besitzt und eine Führung des Kolbens bzw. der dem Kolbenboden abgewandten Enden der Schaftwände vornimmt. Auch die in den Stützwänden zwischen den Schaftwänden gelegenen Abschnitte des Kolbenringes leisten ihren Beitrag, weil eben der Kolbenring in seiner Gesamtheit unter Spannung an der Zylinderinnsnwandfläche anliegt bzw. in der Ringnut in den Schaftwänden und den Stützwänden gelagert ist. Aufgrund der stabilen und vorgespannten Ausbildung des Kolbenringes kann dieser vor allem vor den in der Zylinderwandung ausgebildeten Öffnungen vorbeigleiten.

Ferner wird eine stabile Führung des Kolbens bei gleichzeitig verbesserter Druckverteilung auf die Innenwand des Zylinders erreicht, insbesondere in Hinblick auf eine entsprechende Lagerung des Kolbenringes vor den Gemischströmungsöffnungen im Zylinder.

Mit den Merkmalen des Anspruches 2 wird eine stabile Führung des Kolbens bei gleichzeitig verbesserter Druckverteilung auf die Innenwand des Zylinders erreicht.

Um eine entsprechende Überdeckung der Gemischströmungsöffnungen im Zylinder zu erreichen, sind die Merkmale des Anspruches 3 von Vorteil.

Gute Festigkeitseigenschaften ergeben sich, wenn jedes Bolzenlager mit zumindest einer Kastenwand bzw. einem Träger, insbesondere jeweils zwei Paaren einander gegenüberliegender Kastenwände bzw. Träger bzw. Stegen abgestützt ist, die von den seitlichen Randbereichen der Schaftwände abgehen.

Für eine einfache Montage bzw. Demontage des Kolbenbolzens sind die Merkmale des Anspruches 4 zweckmäßig.

Günstig für die Führung des Kolbens im Zylinder und die Druckverteilung zwischen Kolbenwand und Zylinderwand ist es, wenn die Merkmale des Anspruches 6 vorgesehen werden.

Bei einer vorteilhaften Ausführungsform der Erfindung kann vorgesehen sein, dass ein einziges Bolzenlager vorgesehen ist, das zusätzlich zu zwei Paaren einander gegenüberliegender Kastenwände bzw. Träger mit zumindest einer(m) weiteren Kastenwand bzw, weiteren Träger, vorzugsweise zwei einander gegenüberliegenden Kastenwänden bzw. Trägem, abgestützt ist, welche weiteren Kastenwände bzw. Träger mittig zu den seitlichen Kastewänden bzw. Trägem gelegen sind.

Für die Herstellung und den Einsatz des Kolbens für Zweitaktmotoren ist es von Vorteil, wenn der Kolben aus einem Stück vorzugsweise aus Stahl bzw. einer Stahtlegierung geformt, insbesondere geschmiedet bzw, feingegossen, ist.

Unter Berücksichtigung der Lage der Einlass- und Auslassöffnungen im Zylinder ist es von Vorteil, wenn die Anschlussstellen von den von der die zumindest eine Auslassöffnung des Zylinders abdeckenden Schaftwand zum Bolzenlager abgehenden Trägem innerhalb des Öffnungsbereiches der Auslassöffnung gelegen sind bzw. wenn die Anschlussstellen von den von der die zumindest eine Einströmöffnung abdeckenden Schaftwand zum Bolzenlager abgehenden Trägem innerhalb des Öffnungsbereiches der Einlassöffnung gelegen sind. Es ist dabei auch zu berücksichtigen, ob die Einlass- und Auslassöffnung von nur einer Öffnung oder von mehreren Öffnungen gebildet sind. Diese mehreren Öffnungen können nebeneinander insbesondere auf gleicher Höhe in der Zylinderwand ausgebildet sein. Die jeweilige Schaftwand des Kolbens deckt sodann die zumindest eine Auslassöffnung bzw. die zumindest eine Einlassöffnung ab. Gleichzeitig sind jedoch die Anschlussstellen bzw. die Stellen, an denen die Träger mit der jeweiligen Schaftwand verbunden sind, innerhalb des Öffnungsbereiches der jeweiligen Öffnung angeordnet, damit der von diesen Trägern auf die jeweilige Schaftwand ausgeübte Druck nicht im Bereich der Schaftwand ausgeübt wird, die an der Zylinderinnenwand abgleitet.

Die Merkmale des Anspruches 10 ermöglichen, dass der Kolbenring die Auslassöffnung und die Einlassöffnung, deren Öffnungswinkel in Bezug auf den Kolbenumfang relativ groß ist, überbrückt, ohne dass mechanische Probleme am Kolbenring auftreten. Auch festigkeitsmäßig bieten diese Merkmale Vorteile.

Die Merkmale des Anspruches 11 ermöglichen eine gute Führung des kolbenbodenfernen Abschnittes des Kolbens.

Die Merkmale des Anspruches 13 sind zweckmäßig, um ein gutes Anliegen des Kolbens an der Zylinderinnenwandflächen zu erreichen, wobei gleichzeitig eine entsprechende Deformation des Kolbens derart erfolgt, dass dieser in Betriebsstellung einen kreisförmigen Außenumfang besitzt, der an die Lauffläche des Zylinders angepasst ist bzw. an dieser Lauffläche exakt anliegt.

Durch das exakte Anliegen des Kolbenringes mit seinem gesamten Umfang an der insbesondere kreisförmigen Zylinderinnenwandfläche wird eine exakte Führung und Abdichtung des Kolbens im Zylinder erreicht.

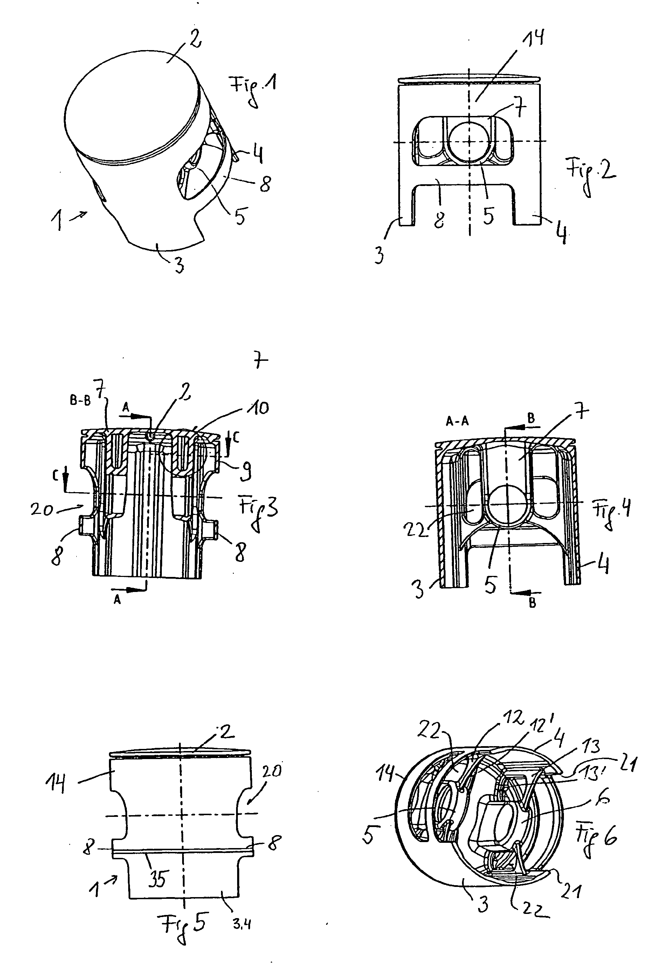

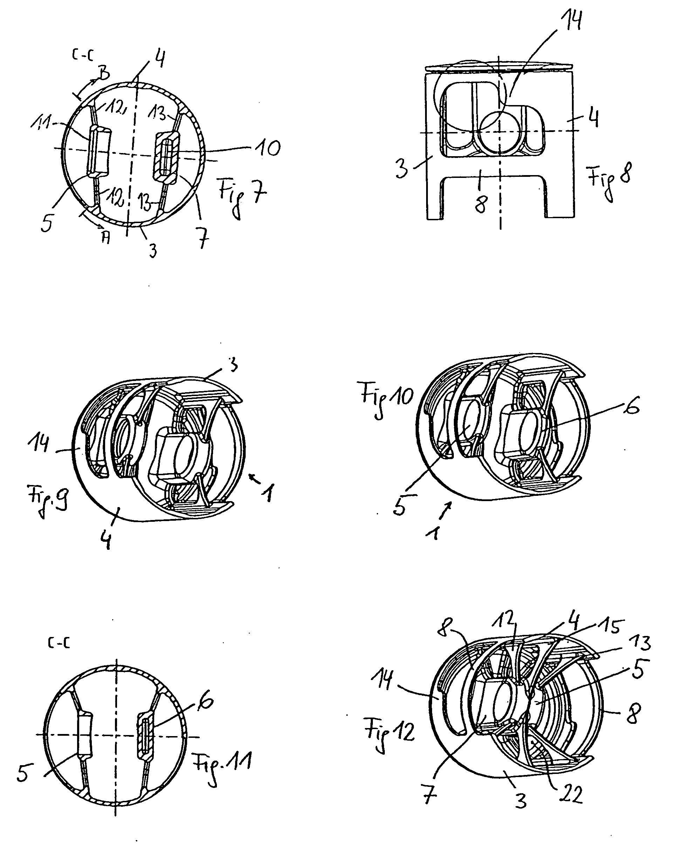

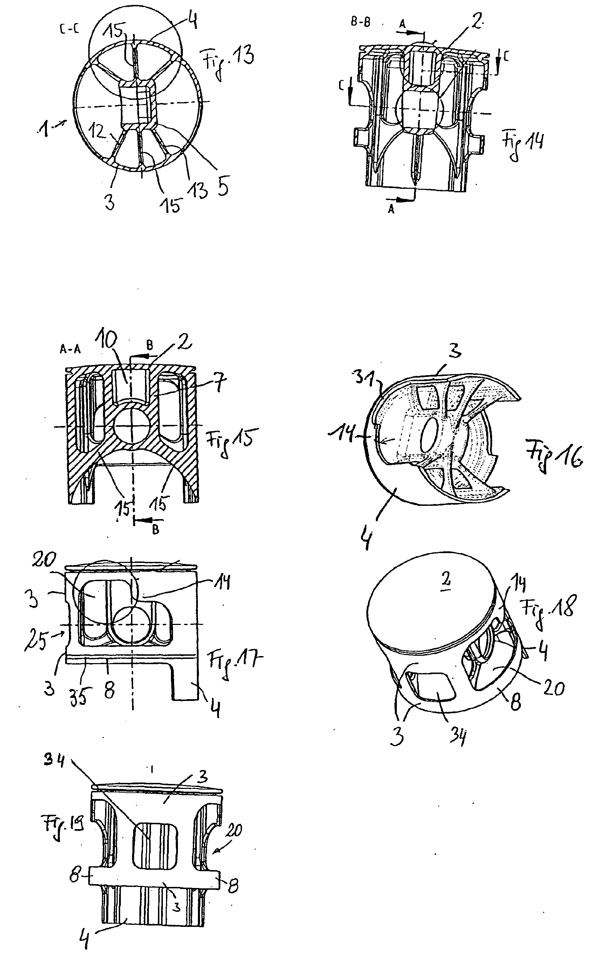

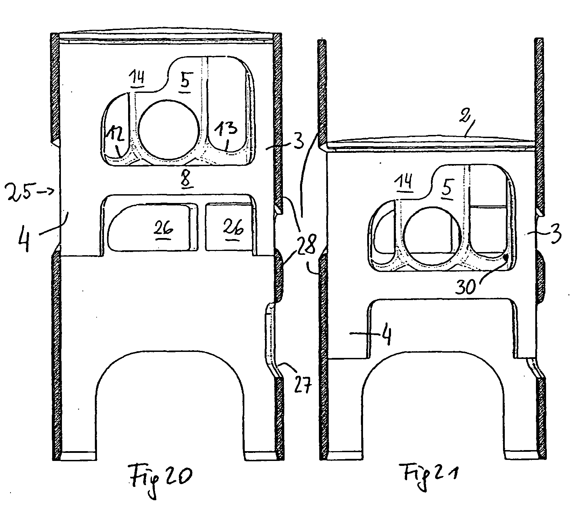

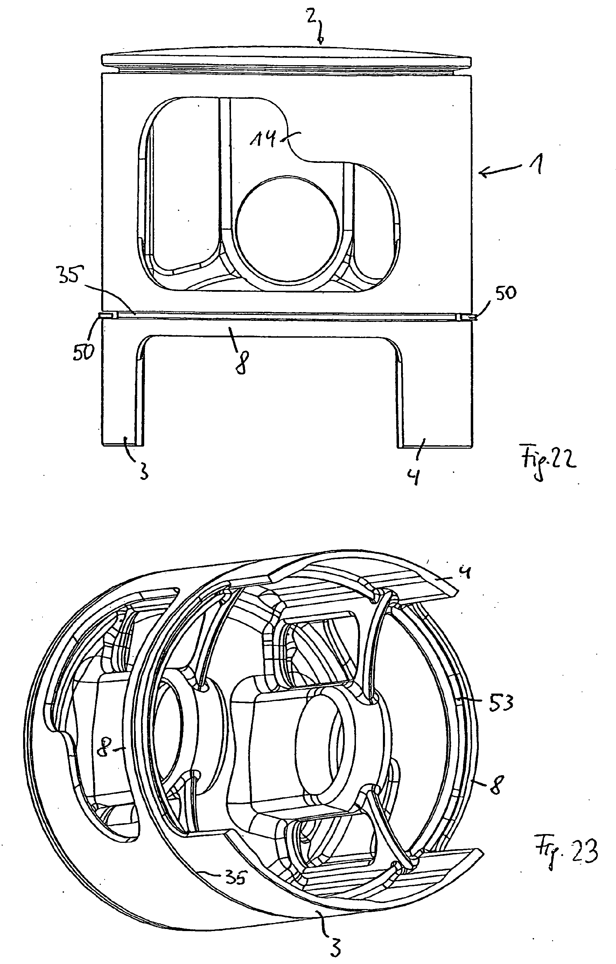

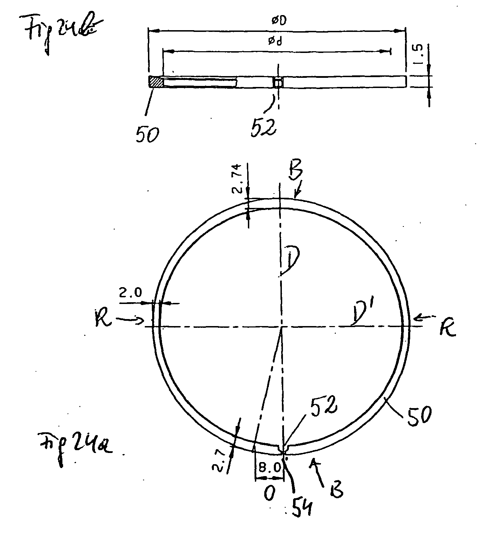

Im Folgenden wird die Erfindung anhand der Zeichnung näher erläutert. Fig. 1 zeigt eine perspektivische Ansicht eines erfindungsgemäßen Kolbens. Fig. 2 zeigt eine Seitenansicht gemäß Fig. 1. Fig. 3 zeigt eine Seitenansicht im Schnitt. Fig. 4 zeigt eine Seitenansicht in einem Schnitt senkrecht zu dem Schnitt in Fig. 3. Fig. 5 zeigt eine um 90° gedrehte Ansicht des Kolbens gemäß Fig. 2. Fig. 6 zeigt eine perspektivische Untersicht des Kolbens. Fig, 7 zeigt eine Untersicht. Fig. 8 zeigt eine Seitenansicht einer Ausführungsvariante. Fig. 9 zeigt eine perspektivische Ansicht dieser Ausführungsvariante. Fig. 10 zeigt eine Ausführungsform eines Kolbens in perspektivischer Untersicht. Fig. 11 zeigt eine perspektivische Untersicht des Kolbens und Fig. 11 eine Unteransicht. Fig. 12 bis 15 zeigen eine perspektivische Untersicht, eine Untersicht, eine Schnittansicht, eine um 90° davon verdrehte Schnittansicht einer erfindungsgemäßen Ausführungsform eines Kolbens. Fig. 16 zeigt eine Ausführungsvariante. Fig. 17, 18 und 19 zeigen einen Kolben in verschiedenen Ansichten, bei dem die die Auslassöffnung abdeckende Schaftwand länger ausgebildet ist als die gegenüberliegende Schaftwand. Fig. 20 und 21 zeigen eine erfindungsgemäße Kombination eines Stahlkolbens mit einem Zylinder. Fig. 22 und 23 zeigen eine Seitenansicht und eine perspektivische Ansicht eines Stahlkolbens mit einem Kolbenring im Stützbund. Fig. 24a und b zeigen einen Kolbenring.

Ein erfindungsgemäßer Kolben 1 besitzt einen Kolbenboden 2, an den einander gegenüberliegende Schaftwände 3 und 4 angeformt sind. Zwischen diesen Schaftwänden 3 und 4 liegen zwei Bolzenlager 5 und 6. Diese Bolzenlager 5, 6 sind jeweils mit einer Abstützung 7 am Kolbenboden 2 abgestützt bzw. mit dieser einstückig ausgebildet.

Die beiden Zwischenräume bzw. die Ausnehmungen 20 zwischen den Schaftwänden 3 und 4 werden durch jeweils eine Stützwand 8 überbrückt. Die Stützwand 8 weist im wesentlichen die Form eines Abschnittes eines Zylinderringes auf, dessen Umfang dem Umfang des Kolbenbodens 2 bzw. einem an diesem Kolbenboden angeformten Wandteil 9 entspricht. Dieser Wandteil 9 erstreckt sich zwischen den Schaftwänden 3 und 4 bzw. verbindet diese im kolbenbodennahen Bereich des Kolbens.

Fig. 7 zeigt im Bolzenlager 5 ausgebildete Sprengrillen 11, um einen Bolzen festzuhalten.

Die Bolzenlager 5 und 6 sind mit Trägern 12 bzw. 13 mit den Schaftwänden 3 bzw. 4 verbunden bzw. abgestützt. Zusätzliche Träger bzw. Verstärkungsrippen 12' und 13' können im Bereich des Kolbenbodens 2 ausgebildet bzw. angeformt sein.

In Fig. 8 und 9 ist eine Ausführungsform eines Kolbens 1 dargestellt, bei dem der Wandteil 14 sich lediglich über einen Teilbereich der Ausnehmungen 20 zwischen den Schaftwänden 3 und 4 erstreckt. Der Wandteil 14 kann in einer oder in beiden Ausnehmungen 20 ausgebildet sein.

Sowohl der Wandteil 14 als auch die Stützwand 18 sind derart ausgebildet, dass die Bolzenlager 5, 6 zum Ein- bzw. Ausbau eines Bolzens frei zugänglich sind.

Fig. 10 und 11 zeigen Ansichten eines Kolbens 1, bei dem die Bolzenlager 5, 6 ohne Sprengrille 11 ausgebildet sind und ein Bolzen entsprechend eingeschrumpft werden kann.

Bei der in Fig. 12 bis 15 dargestellten Ausführungsform eines Kolbens 1 ist lediglich ein einziges Bolzenlager 5 vorgesehen, das am Kolbenboden 2 abgestützt bzw. angeformt ist. Insbesondere Fig. 13 zeigt ein zusätzliches Paar von Trägern 15, die sich längs eines Durchmessers des Kolbenbodens 2 erstrecken. Prinzipiell ist es möglich, auch nur einen Träger 15, und zwar an der Seite des Bolzenlagers 5 vorzusehen, die der auslassseitigen Schaftwand 4 zugekehrt ist.

Von Vorteil kann es bei einem einzigen Bolzenlager sein, wenn die zu den seitlichen Endbereichen der Schaftwände 3 und 4 abgehenden Träger 12 und 13 bezüglich des weiteren Trägers 15 symmetrisch angeordnet bzw. ausgebildet sind, so wie dies aus Fig. 13 ersichtlich ist.

Die Abstützung 7 dieses Kolbens 1 ist, wie aus Fig. 15 ersichtlich, ebenfalls mit einer Ausnehmung 10 versehen.

Insbesondere aus Fig. 1 und 6 ist ersichtlich, dass die Stützwand 8 der Umfangsform der Schaftwände 3 und 4 folgt. Damit werden die Schaftflächen 3 und 4 zusätzlich an der Innenfläche des Zylinders abgestützt und der Druck der Schaftwände 3 und 4 wird auf die Innenfläche des Zylinders gleichmäßig verteilt. Des weiteren wird der Schmierfilm besser verteilt und es ergibt sich insgesamt eine Verringerung der Gefahr von Verreibungen.

Diese Vorgangsweise ist insbesondere wichtig, da der erfindungsgemäße Kolben aus Stahl ausgebildet sein soll, insbesondere aus einer Legierung 31 CrMoV9, und als Kolben für Zweitaktmotoren höheren Temperaturbelastungen standhalten soll. Es ist dabei jedoch auch beachtlich, dass der Kolbenschaft eine gewisse Elastizität aufweisen soll. Diese Elastizität wird dadurch gewährleistet, dass beidseits zwischen den beiden Schaftwänden 3, 4 jeweils eine Aussparung 20 vorhanden ist, die lediglich von der Stützwand 8 überbrückt wird. Des weiteren kann diese Aussparung 20 zwischen den beiden Schaftwänden 3 und 4 von dem Wandteil 14 zumindest teilweise überbrückt werden, wodurch die Führung des Kolbens 1 im Zylinder verbessert wird und Vibrationen verringert werden. Ein derartiger Kolben ist insbesondere von Vorteil für einen Betrieb mit mager eingestellten Gemischen.

Es ist zusätzlich möglich, auf die Schaftflächen 3, 4 bzw. die Innenwandung des Zylinders und/oder die Stützwand 18 und/oder den Wandteil 14 Oberflächenbeschichtungen zur Verbesserung der Laufeigenschaften aufzubringen.

Wie beispielsweise aus Fig. 7 ersichtlich ist, gehen die Träger 12 und 13 von seitlichen Endbereichen der Schaftflächen 3 und 4 ab. Die Schaftwände 3 und 4 decken die zumindest eine Überströmöffnung 26 und zumindest eine Einlassöffnung 27 in den Zylinder 28 ab und sind etwas breiter als diese Öffnungen. Die Träger 12, 13 stützen sich dabei jeweils in einem Bereich der Schaftwände 3, 4 ab, der vor der Einlass- bzw. Auslassöffnung liegt.

Mit einer Anordnung der Träger 12 und 13 derart, dass sie im Bereich dieser Öffnungen im Zylinder 28 liegen, wird die Elastizität der Schaftwände 3 und 4 in deren seitlichen Randbereichen nicht beeinträchtigt bzw. können elastische an denjenigen Abschnitten der Innenwandfläche des Zylinders anliegen, die seitlich der Öffnungen im Zylinder liegen.

Vorteilhaft ist es, wenn die Stützwand 8 eine der Krümmung der Schaftwände 3, 4 entsprechende Krümmung aufweist und vorzugsweise die Form eines Abschnittes eines Zylinderringes besitzt. Die Breite der Ausströmöffnung bzw. der Überströmöffnung kann etwa 65 bis 85%, insbesondere 70 bis 80%, der jeweiligen diese Öffnung abdeckenden Schaftwand 3, 4 betragen.

Von Vorteil ist es, wenn die Stützwand 8 in einem Bereich der Schaftwände 3, 4 gelegen ist, der einer Höhe von 50 bis 90%, vorzugsweise 55 bis 80%, der Höhe der Schaftwände 3, 4, gemessen vom Kolbenboden 2 aus, entspricht, wobei die Breite der Stützwand 10 bis 25%, vorzugsweise 10 bis 15%, der Höhe der Schaftwände 3, 4 entspricht. Da die Schaftwände 3, 4 unterschiedliche Höhe besitzen können, gelten diese Angaben für die jeweils höhere Schaftwand, welche die Auslassöffnung 25 verschließt.

Es kann entsprechend Fig. 3 vorgesehen sein, dass in der Abstützung 7 der Bolzenlager 5, 6 bzw. der Nabe am Kolbenboden 2 ein Hohlraum bzw. eine Ausnehmung 10 ausgebildet, insbesondere ausgefräst, ist, um Gewicht einzusparen, die vorzugsweise in ihrem kolbenbodenseitigen Endbereich mit einem in den Kolbenboden 2 eingeschweißten, nicht dargestellten, Einsatzstück verschlossen ist.

Aufgrund der unterschiedlichen Umfangserstreckung der Schaftwände 3 und 4 schließen die Träger 12 und 13 unterschiedliche Winkel mit der Kolbenachse ein. Die Lage der Träger 12, 13 bei einem Kolben gemäß Fig. 7 ergibt sich durch die Lage der Bolzenlager 5 und 6 und der Lage der seitlichen Endbereiche der Schaftwände 3 und 4, welche Endbereiche seitlich außerhalb der Abstützpunkte der Träger 12, 13 liegen bzw. anschließen.

Die Anbindung der Träger 12 und 13 erfolgt somit in einem vorgegebenen Abstand von den seitlichen Endbereichen bzw. Seitenflächen 21 der Schaftwände 3 und 4. Vorteilhafterweise beträgt der gegenseitige Abstand zwischen den Trägem 12 und 13 bei den jeweiligen Schaftwänden 3 und 4 etwa 65 bis 85 %, insbesondere 70 bis 80%, der Breite der jeweiligen Schaftwand 3 bzw. 4. Die Breite der Schaftwände 3, 4 übersteigt seitlich die Breite der Auslassöffnung einschließlich von Zusatzauslassöffnungen. Damit wird vermieden, dass die steifen Bereiche der Schaftwände 3 und 4 direkt an dem auslassseitigen schmalen Zylinderwandbereich zwischen Auslasskanal und Zusatzauslasskanal zum Anliegen kommt, da dort hohe Temperaturen und eine hohe spezifische Pressung herrschen, die zu einem Verreiben führen können. Durch Verlegung der Träger 12, 13 in einen Bereich, in dem diese vor bzw. innerhalb der Auslasskanalöffnung bzw. der Auslassöffnung zu liegen kommen, wird der Kolben bzw. werden die Schaftwände 3 und 4 elastischer und die spezifische Pressung reduziert.

Von Vorteil ist es, wenn der Wandteil 14 die Form eines Abschnittes eines Zylinderringes aufweist bzw. der Form des Umfangs des Kolbenbodens 2 angepasst ist, wobei gegebenenfalls die Höhe des Wandteils 14 5 bis 25%, vorzugsweise 10 bis 20 %, der Höhe der Schaftwände 3, 4 beträgt bzw. der Wandteil 14 sich über 30 bis 70%, vorzugsweise 40 bis 60%, des Abstandes zwischen den Seitenflächen 21 der Schaftwände 3, 4 erstreckt.

Um die mechanische Beanspruchbarkeit des Kolbens 1 zu erhöhen, ist vorgesehen, dass Übergänge von den Stützwänden 8 und dem Wandteil 14 zum Kolbenboden 2 bzw. zu den Schaftwänden 3 und 4 gerundet sind.

Wie insbesondere aus Fig. 6 und 12 ersichtlich ist, gehen die Träger 12, 13 und 15 von dem kolbenbodenfernen Bereich des Bolzenlagers 5 ab.

Von Vorteil hat es sich erwiesen, wenn die bandförmige Stützfläche 8 parallel zum Kolbenboden 2 verläuft.

Der erfindungsgemäße Kolben ist einfach herstellbar bzw. kann allenfalls bis auf das Einsatzstück zum Verschließen der Ausnehmung 10 aus einem Stück geformt bzw. geschmiedet bzw. feingegossen werden.

Von Vorteil ist die Ausbildung von zwischen den Trägern 12, 13, 15 und der Abstützung 7 bzw. den Innenflächen der Schaftwände 3 und 4 ausgebildeten Durchströmöffnungen, da damit der Gemischtransport innerhalb des Kolbens nicht beeinträchtigt und die Kühlung verbessert wird.

Aufgrund des für den Kolben verwendeten Materials, nämlich Stahl, ist es möglich, auf Sicherungsringe bzw. die Ausbildung von Sicherungsringnuten 11 zu verzichten, da der Bolzen durch Schrumpfen in die Bohrung des Bolzenlagers 5, 6 eingesetzt werden kann.

Durch eine mittige Anbringung der Abstützung 7 am Kolbenboden 2 bei einem einzigen Bolzenlager ist eine zentrale Krafteinleitung des Verbrennungsdruckes auf den Bolzen möglich. In diesem Fall ist ein Gabelpleuel vorzusehen. Aufgrund des auf ein einziges Bolzenlager wirkenden hohen Druckes ist es von Vorteil, einen weiteren Träger 15 anzubringen, der mittig am Bolzenlager 5 und mittig an der jeweiligen Schaftwand 3 bzw. 4 angebracht bzw. angebunden wird und damit ohne Umlenkung die Krafteinleitung direkt in die Nabe bzw. auf den Bolzen vornimmt. Möglich ist es dabei, je nach der Belastung, einen Träger 15 nur auf der Kolbendruckseite vorzusehen.

In der Praxis zeigt es sich, dass durch die vorgesehene Stützwand 8 eine beträchtliche Gewichtsreduzierung aufgrund der Freiflächen bzw. Ausnehmungen 20 zwischen den Schaftwänden 3 und 4 erreicht wird, ohne jedoch die Führungseigenschaften zu beeinträchtigen. Es zeigte sich auch, dass die Wandfläche 8 nicht unbedingt im kolbenbodenfernen Endbereich der Schaftwände 3 und 4 ausgebildet werden muss. Die Wandfläche 8 kann auch im Abstand der kolbenfernen Endbereiche der Schaftwände 3 und 4 ausgebildet werden.

Des weiteren ist vorgesehen, dass auf der Höhe des Führungsbundes 8 bzw. der Stützwand 8 die Schaftflächen 3 und 4 und die Stützwände 8 kreisförmigen Querschnitt besitzen. Oberhalb der Stützwand 8 bzw. in ihren kolbennahen Endbereichen besitzen die Schaftwände 3 und 4 allenfalls einen ovalen Querschnitt, der, wie der Umfang des Kolbenbodens, geringfügig von Kreisform abweicht.

Fig. 16 zeigt eine perspektivische Ansicht eines Kolbens bei dem vorgesehen ist, dass an den Wandteil 14 eine dem Umfang des Kolbenbodens 2 folgende Ringwand 31 anschließt und in die jeweilige Schaftwand 3 einläuft, wobei die Höhe dieser Ringwand 31 etwa 20 bis 40 % der Höhe des Wandteiles 14 entspricht.

Fig. 17 zeigt eine Seitenansicht eines erfindungsgemäßen Kolbens, bei dem die Schaftwand 3 kürzer ausgebildet ist als die Schaftwand 4. Die Schaftwand 3 endet auf dem Niveau der Stützwand 8. Prinzipiell könnte die Schaftwand 3 auch die Stützwand 8 überragen; bei dieser Ausführungsform der Erfindung ist jedoch vorgesehen, dass aus Gewichtseinsparungsgründen die Schaftwand 3 kürzer gehalten ist bzw. in der Schaftwand 3 eine Ausnehmung 34 ausgebildet ist. Ein derartiger Kolben ist insbesondere dann von Vorteil einsetzbar, wenn der Zylinder 28, in dem der Kolben 1 laufen soll, keine Einströmöffnungen aufweist.

Fig. 18 ist zu entnehmen, dass die Schaftwand 3 von zwei in Richtung der Kolbenachse verlaufenden seitlichen Stegen herleiten, einem kolbenbodennahen Steg und einem kolbenbodenfernen Steg, gebildet ist. Diese Ausführung reicht aus, um ein gutes Abgleiten der Schaftwand 3 an der Innenfläche des Zylinders 28 zu gewährleisten.

Fig. 19 zeigt eine Ansicht dieser Ausführungsform eines Kolbens 1 in einer Ansicht auf die Schaftfläche 3.

Fig. 20 und 21 zeigen eine Ausführungsform eines erfindungsgemäßen Kolbens 1 in einem Zylinder 28. Die Schaftwand 4 deckt die Auslassöffnung 25 des Zylinders 28 ab. Man erkennt eine Reihe von Überströmöffnungen 26, die im wesentlichen auf gleicher Höhe in der Wandung des Zylinders 28 ausgebildet sind. Eine Einlassöffnung 27 kann von der Schaftwand 3 abgedeckt werden.

Man erkennt des weiteren die Ansatzpunkte 29 und 30 der Träger 12 bzw. 13 an der Innenfläche der jeweiligen Schaftwand 3 bzw. 4, welche Träger 12, 13 das Bolzenlager 5 abstützen, das an den Kolbenboden 2 angeformt ist.

Aus Fig. 21 ist ersichtlich, dass die Höhe des Wandteils 14 maximal der Höhendifferenz zwischen der Oberkante der Auslassöffnung 25 und der Oberkante der zumindest einen Überströmöffnung 26 entspricht.

Von Vorteil kann es sein, wenn die Ausnehmung 34 eine Höhe aufweist, die 20 bis 80%, insbesondere der Höhe und eine Breite aufweist, die 30 bis 70%, insbesondere 40 bis 65% der Breite der Schaftwand 3 entspricht.

Wie in den Fig. 5 und 7 ersichtlich ist, können in den Kolben auch über den Umfang verlaufende Nuten 35 zur Aufnahme von Kolbenringen 50 eingearbeitet sein. Diese Kolbenringe 50 werden in diese Nuten 35 eingesetzt und sind gegen Verdrehung gesichert. Damit können das Abdichtverhalten des Bundes bzw. der Stützwand 8 verbessert werden und der Wirkungsgrad der Kurbelgehäusepumpe gesteigert bzw. Frischgasverluste verringert werden. Es wird des weiteren vermieden, dass zwischen dem Kolben und der Zylinderwand Frischgase direkt in den Auspuff entweichen. Derartige Kolben sind auch in den Fig. 22 und 23 dargestellt. Fig. 24a und b zeigen Kolbenringe 50, die in die Nuten 35 eingesetzt werden können.

Wie in den Fig. 5, 7, 22 und 23 ersichtlich ist, sind in dem Kolben 1 über den Umfang der Schaftwände 3, 4 und der Stützwände 8 verlaufende Nuten 35 zur Aufnahme von Kolbenringen 50 eingearbeitet. Die Kolbenringe 50 werden in diese Ringnuten 35 eingesetzt und sind gegen Verdrehung gesichert. Damit können das Abdichtverhalten des Kolbens verbessert und der Wirkungsgrad der Kurbelgehäusepumpe gesteigert bzw. Frischgasverluste verringert werden. Es wird des weiteren vermieden, dass zwischen dem Kolben und der Zylinderinnenwandfläche Frischgase direkt in den Auspuff entweichen.

Fig. 7 zeigt eine Ansicht eines Kolbens 1 gemäß Fig. 1 und 2 mit einem in die Ringnut 35 eingesetzten Kolbenring 50. Die Ringnut 35 kann in unterschiedlichen Lagen ausgebildet werden.

Fig. 24a zeigt einen Kolbenring 50, der ein Kolbenmaul 52 besitzt. Dieser Kolbenring 50 ist in seiner geschlossenen Stellung dargestellt, d.h. in seiner zusammengedrückten Stellung. Im von außen unbelasteten Zustand besitzt der Kolbenring 50 eine Maulweite O, so wie diese in Fig. 4 angedeutet ist. Es ist vorgesehen, dass der Kolbenring 50 negativ oval vorgespannt ist, wobei die Vorspannung im Bereich B des Ringmauls 52 zurückgenommen bzw. gegenüber der Vorspannung im diametral gegenüberliegenden Ringbereich verringert ist.

Diese Vorspannung dient dazu, dass der Kolbenring 50 sobald der Kolben 1 mit dem Kolbenring 50 in einem Zylinder 28 angeordnet ist, entsprechend an der Zylinderinnenwandfläche anliegt bzw. angedrückt werden kann.

Zum Erreichen dieser Vorspannung ist vor allem vorgesehen, dass der Kolbenring 50 im Bereich seiner Maulöffnung 52 und in seinem der Maulöffnung 52 gegenüberliegenden Bereich B radial verstärkt bzw. radial verbreitert ausgebildet ist. Die Verstärkung kann von dem Bereich R mit der geringsten Ringdicke kontinuierlich bis zu einem Maximalwert zunehmen, der die geringste in radialer Richtung gemessene Ringdicke um 20 bis 40%, vorzugsweise 25 bis 35%, übersteigt.

Um die Funktionen des erfindungsgemäßen Kolbenrings 50 optimal ausüben zu können, nämlich die Führung des Kolbens 1 bzw. die Abdichtung des Kolbens 1 gegenüber der Zylinderinnenwandfläche, ist es von Vorteil, wenn der Kolbenring 50 in einem Abstandsbereich von 50 bis 98%, vorzugsweise 60 bis 98%, der Höhe des Kolbens vom Kolbenboden 2 entfernt in seiner Ringnut 35 gelagert ist.

Um eine Schwächung der Schaftwände 3, 4 durch das Einarbeiten einer Ringnut 35 zu vermeiden, sind an den jeweiligen Innenseiten der Schaftwände 3, 4 im Bereich der Ringnut 35 jeweils eine umlaufende Wandverstärkung 53 ausgebildet. Die Höhe und die Breite der Wandverstärkungen 53 können die Höhe der Ringnut 35 bzw. die Tiefe der Ringnut 35 jeweils um etwa 50 bis 200%, vorzugsweise 80 bis 150%, übersteigen.

Um dem Kolbenring 50 hohe Elastizität und Festigkeit zu verleihen, ist vorgesehen, dass der jeweilige radial verbreiterte Bereich des Kolbenringes 50 sich über einen Zentralwinkelbereich von 70 bis 110°, insbesondere 80 bis 190°, erstreckt und/oder der Querschnitt des Kolbenrings 50 trapezförmig ist, wobei die längere der parallelen Seiten den Außenumfang des Kolbenringes 50 bildet.

Wie aus Fig. 24a ersichtlich ist, ist vorgesehen, dass der Kolbenring 50 bei aneinanderstoßenden Stirnflächen 54 einen von der Kreisform abweichenden Außenumfang aufweist, wobei der durch den Stoß verlaufende Durchmesser D größer ist als der senkrecht dazu verlaufende Durchmesser D' und die Differenz dieser beiden Durchmesser etwa 40 bis 80%, vorzugsweise 50 bis 70°, der geringsten Ringdicke, gemessen in radialer Richtung, übersteigt.

Mit dem Kolbenring 50 werden die Schaftflächen 3 und 4 zusätzlich an der Innenwandfläche des Zylinders 28 abgestützt und der Druck der Schaftwände 3 und 4 wird auf die Innenwandfläche des Zylinders 28 gleichmäßiger verteilt. Des weiteren wird der Schmierfilm besser verteilt und es ergibt sich insgesamt eine Verringerung der Gefahr von Verreibungen.

Diese Vorgangsweise ist insbesondere wichtig, da der erfindungsgemäße Kolben aus Stahl ausgebildet sein soll, insbesondere aus einer Legierung 31CrMoV9, und als Kolben für Zweitaktmotoren höheren Temperaturbelastungen standhalten soll. Die den Freiraum 51 zwischen den beiden Schaftwänden 3 und 4 überbrückenden Stützteile 8 unterstützen die Führung des Kolbens 1 im Zylinder 28 und verringern Vibrationen.

In der Praxis zeigt es sich, dass durch die vorgesehenen Freiräume 51 eine beträchtliche Gewichtsreduzierung erreicht wird, ohne jedoch die Führungseigenschaften zu beeinträchtigen. Es zeigte sich auch, dass die in einer zur Kolbenachse senkrechten Ebene verlaufende Ringnut 35 nicht unbedingt im kolbenbodenfernen Endbereich der Schaftwände 3 und 4 ausgebildet werden muss. Die Ringnut 35 kann auch im Abstand von den kolbenbodenfernen Endbereichen der Schaftwände 3 und 4 ausgebildet werden.

Des weiteren ist vorgesehen, dass auf der Höhe der Ringnut 35 die Außenflächen der Schaftwände 3 und 4 kreisförmigen Querschnitt besitzen. Oberhalb der Ringnut 35, d.h. in ihren kolbenbodennahen Endbereichen können die Außenflächen der Schaftwände 3 und 4 allenfalls einen ovalen Querschnitt besitzen, der, wie der Umfang des Kolbenbodens, geringfügig von Kreisform abweicht.

Es ist möglich, dass eine Schaftwand 3 kürzer ausgebildet ist als die andere Schaftwand 4. Die eine Schaftwand 3 könnte knapp unterhalb des Niveaus der Ringnut 35 enden. Bei einer derartigen Ausführungsform der Erfindung ist aus Gewichtseinsparungsgründen die diese eine Schaftwand 3 kürzer gehalten bzw. allenfalls in dieser Schaftwand 3 zusätzlich eine Ausnehmung 34 ausgebildet. Ein derartiger Kolben ist insbesondere dann von Vorteil einsetzbar, wenn der Zylinder 28, in dem der Kolben 1 laufen soll, keine Einströmöffnungen aufweist.

Wichtig ist es, dass die die Schaftwände 3, 4 verbindenden Stützwände 8 freitragend sind und nicht mit anderen Kolbenteilen, z.B. den Bolzenlagern 5 oder Kastenwänden, verbunden sind, insbesondere um ihre elastischen Eigenschaften nicht zu beeinträchtigen. Dies ist insbesondere auch bei Anordnung eines Kolbenringes in einer in den Stützwänden 8 verlaufenden Nut 35 von Bedeutung, um gleichmäßige ungehinderte thermisch bedingte Formänderungen zuzulassen. Ferner ist die Ausführung leicht und einfach herstellbar.

## Patentansprüche

1. Kolben, insbesondere für Zweitaktmotoren, mit zwei einander gegenüberliegenden Schaftwänden (3, 4) zwischen denen zumindest ein am Kolbenboden (2) abgestütztes Bolzenlager (5, 6) gelegen ist, wobei sich die Schaftwände (3, 4) jeweils über einen Teilbereich des Umfangs des Kolbens bzw. Kolbenbodens (2) erstrecken, wobei die beiden Schaftwände (3, 4) über zumindest eine, vorzugsweise bandförmige, freispannende Stützwand (8) verbunden sind, die im Abstand vom Kolbenboden (2) gelegen ist, **dadurch gekennzeichnet, dass** in den beiden Schaftwänden (3, 4) und den Stützwänden (8) zumindest eine umlaufende Nut (35) ausgebildet ist, in der ein Kolbenring (50) angeordnet ist.

2. Kolben nach Anspruch 1, **dadurch gekennzeichnet, dass** die Stützwand (8) eine der Krümmung der Schaftwände (3, 4) entsprechende Krümmung aufweist und vorzugsweise die Form eines Abschnittes eines Zylinderringes besitzt.

3. Kolben nach Anspruch 1 oder 2, **dadurch gekennzeichnet, dass** die eine Schaftwand (3) sich über einen Winkel (A) von 55 bis 90°, vorzugsweise von 60 bis 80°, und/oder die andere, gegebenenfalls gleich hohe Schaftwand (4) sich über einen Winkel (B) von 90 bis 115°, insbesondere von 100 bis 110°, längs des Umfangs bzw. Randes des Kolbenbodens (2) erstrecken bzw. am Kolbenboden (2) angeformt sind.

4. Kolben nach einem der Ansprüche 1 bis 3, **dadurch gekennzeichnet, dass** die vom unteren Rand des Kolbenbodens (2), den Seitenflächen (21) der beiden Schaftwände (3, 4) und der diese Schaftwände (3, 4) verbindenden Stützwand (8) gebildete Ausnehmung (20) das Bolzenlager (5. 6) freistellt.

5. Kolben nach einem der Ansprüche 1 bis 4, **dadurch gekennzeichnet, dass** die Stützwand (8) in einem Bereich der Schaftwände (3, 4) gelegen ist, der einer Höhe von 50 bis 90%, vorzugsweise 55 bis 80%, der Höhe der Schaftwände (3, 4) bzw. der Höhe der höheren Schaftwand (4), gemessen vom Kolbenboden (2) aus, entspricht und/oder dass die Höhe der Stützwand (8) 10 bis 25%, vorzugsweise 10 bis 15%, der Höhe der Schaftwände (3, 4) bzw. der Höhe der höheren Schaftwand (4) entspricht.

6. Kolben nach einem der Ansprüche 1 bis 5, **dadurch gekennzeichnet, dass** von zumindest einer Schaftwand (3, 4) seitlich ein sich längs des Kolbenumfanges erstreckender Wandteil (14) abgeht, der sich zumindest über einen gewissen Teilbereich des Abstandes zwischen den Seitenflächen (21) der beiden Schaftwände (3, 4) erstreckt und gegebenenfalls die beiden Schaftwände (3, 4) miteinander verbindet, wobei gegebenenfalls der Wandteil (14) die Form eines Abschnittes eines Zylinderringes aufweist bzw. der Form des Umfangs des Kolbenbodens (2) angepasst ist und/oder die Höhe des Wandteils (14) 5 bis 25%, vorzugsweise 10 bis 20 %, der Höhe der Schaftwände (3, 4) bzw. der Höhe der höheren Schaftwand (4) beträgt und/oder dass der Wandteil (14) sich über 30 bis 70%, vorzugsweise 40 bis 60%, des Abstandes zwischen den Seitenflächen (21) der Schaftwände (3, 4) erstreckt und/oder dass der Wandteil (14) das Bolzenlager (5, 6) freistellt.

7. Kolben nach einem der Ansprüche 1 bis 6, **dadurch gekennzeichnet, dass** die jeweiligen Stützwände (8) im Abstand zu dem Bolzenlager (5, 6) gelegen sind und/oder dass die Stützwand (8) freitragend den Zwischenraum zwischen den beiden Schaftwänden (3, 4) überbrückt und/oder dass die Stützwände (8) ausschließlich mit den Schaftwänden (3, 4) verbunden und ausschließlich von diesen getragen sind und/oder mit dem Bolzenlager (5, 6) nicht verbunden sind.

8. Kolben nach einem der Ansprüche 1 bis 7, **dadurch gekennzeichnet, dass** die Stützwand (8) und die Schaftwände (3, 4) auf der Höhe der Stützwand (8) oder die Schaftwände (3, 4) in ihrem kolbenbodenfemen, an die Stützwand (8) anschließenden Endbereich, kreisförmigen Außenumfang aufweisen.

9. Kolben nach einem der Ansprüche 1 bis 8, **dadurch gekennzeichnet, dass** die Maulöffnung (52) des Kolbenringes (50) im Umfangsbereich einer Schaftwand (3, 4) fixiert ist.

10. Kolben nach einem der Ansprüche 1 bis 9, **dadurch gekennzeichnet, dass** der Kolbenring (50) negativ oval vorgespannt ist, wobei die Vorspannung im Bereich des Ringmauls (52) zurückgenommen bzw, gegenüber der Spannung im diametral gegenüberliegenden Ringbereich verringert ist, insbesondere um 10 bis 30%, verringert ist und/oder dass der Kolbenring (50) im Bereich seiner Maulöffnung (52) und in seinem der Maulöffnung (52) gegenüberliegenden Bereich (B) radial verstärkt bzw. verbreitert ausgebildet ist, wobei gegebenenfalls die Verstärkung von dem Bereich mit der geringsten Ringdicke (R) kontinuierlich bis zu einem Maximalwert zunimmt, der die geringste in radialer Richtung im Bereich (R) gemessene Ringdicke um 20 bis 40%, vorzugsweise 25 bis 35%, übersteigt und/oder der jeweilige radial verbreiterte Bereich (B) des Kolbenringes (50) sich über einen Zentralwinkelbereich von 70 bis 110°, insbesondere 80 bis 190°, erstreckt.

11. Kolben nach einem der Ansprüche 1 bis 10, **dadurch gekennzeichnet, dass** der Kolbenring (50) in einem Abstand von 50 bis 88%, vorzugsweise 60 bis 88%, der Höhe des Kolbens vom Kolbenboden (2) entfernt in seiner Ringnut (35) gelagert ist und/oder dass der Querschnitt des Kolbenrings (50) trapezförmig ist, wobei die längere der parallelen Seiten den Außenumfang des Kolbenringes (50) bildet.

12. Kolben nach einem der Ansprüche 1 bis 11, **dadurch gekennzeichnet dass** an den jeweiligen Innenseiten der Schaftwände (3, 4) und der Stützwände (8) im Bereich der Ringnut (35) jeweils eine umlaufende Wandverstärkung (53) ausgebildet ist, wobei gegebenenfalls die Höhe und die Breite der Wandverstärkungen (53) die Höhe der Ringnut (35) bzw. die Tiefe der Ringnut (35) um etwa 50 bis 200%, vorzugsweise 80 bis 150%, übersteigen.

13. Kolben nach einem der Ansprüche 1 bis 12, **dadurch gekennzeichnet, dass** der in seine Ringnut (35) eingesetzte, von außen unbelastete Kolbenring (50) bei aneinanderstoßenden bzw. aneinander anliegenden Stirnflächen (54) einen von der Kreisform abweichenden Außenumfang aufweist, wobei ein durch die Stirnflächen (54) bzw. deren Stoß verlaufende Durchmesser (D) größer ist als der senkrecht dazu verlaufende Durchmesser (D') und die Differenz dieser beiden Durchmesser etwa 40 bis 80%, vorzugsweise 50 bis 70°, die geringste in radialer Richtung gemessene Ringdicke im Bereich (R) übersteigt.

14. Zylinder, insbesondere für Zweitaktmotor, mit einem dazugehörigen bzw. darin gelagerten Kolben, welcher Kolben (1) gemäß einem der Ansprüche 1 bis 13 ausgebildet ist.

15. Zylinder mit Kolben nach Anspruch 14, **dadurch gekennzeichnet, dass** der Kolbenring (50) mit seiner gesamten Umfangsfläche an der, insbesondere kreisförmigen, Zylinderinnenwandfläche (54) anliegt bzw. der Kolbenring (50) von der Zylinderinnenwandfläche zu einem Ring mit kreisförmigen Außendurchmesser verformt ist und/oder dass der Kolbenring (50) am Kolben in Umfangsrichtung lagefixiert ist und die radial verbreiterten Bereiche des Kolbenringes in den Bereichen der Zylinderwandinnenfläche (54) liegen, in denen die Auslassöffnung (25) und die Einlassöffnung (27) ausgebildet sind und/oder dass der Stoß des Kolbenringes (50) bzw. das Ringmaul (52) vor der Zylinderinnenwandfläche (54) liegt bzw. fixiert ist, in der die Einlassöffnung (27) ausgebildet ist.

## Claims

1. A piston, especially for two-stroke engines, having two opposite skirt walls (3, 4) between which at least one pin support (5, 6) is disposed supported on the piston top (2), each of said skirt walls (3, 4) extending over a partial portion of the piston's or the piston top's (2) circumference, the two skirt walls (3, 4) being connected via at least one free-spanning supporting wall (8), which is preferably band-shaped and is disposed spaced apart from the piston top (2), **characterised in that** at least one circumferential groove (35), in which a piston ring (50) is placed, is formed in the two skirt walls (3, 4) and the supporting walls (8).

2. The piston according to claim 1, **characterised in that** said supporting wall (8) is curved according to the curvature of the skirt walls (3, 4) and is preferably shaped like a segment of a cylindrical ring.

3. The piston according to claim 1 or claim 2, **characterised in that** one of said skirt walls (3) spans an angle (A) of 55 to 90°, preferably of 60 to 80°, and/or the other skirt wall (4), which optionally is of the same height, spans an angle (B) of 90 to 115°, especially of 100 to 110°, along the circumference or the rim of the piston top (2), said walls optionally being moulded to said piston top (2).

4. The piston according to any one of the claims 1 to 3, **characterised in that** an opening (20) formed by the lower rim of the piston top (2), the lateral faces (21) of the two skirt walls (3, 4) and the supporting wall (8) connecting said skirt walls (3, 4) exposes the pin support (5, 6).

5. The piston according to any one of the claims 1 to 4, **characterised in that** the supporting wall (8) is positioned in an area of the skirt walls (3, 4) at a height corresponding to 50 to 90 %, preferably to 55 to 80 %, of the height of said skirt walls (3, 4) or of the height of the higher skirt wall (4), respectively, as measured from the piston top (2), and/or **in that** the height of the supporting wall (8) corresponds to 10 to 25 %, preferably to 10 to 15 %, of the height of the skirt walls (3, 4) or of the height of the higher skirt wall (4), respectively.

6. The piston according to any one of the claims 1 to 5, **characterised in that** a wall part (14) extending laterally along the piston's circumference is laterally formed to at least one of the skirt walls (3, 4), said wall part (14) spanning at least a certain partial area of the distance between the two lateral faces (21) of said two skirt walls (3, 4), thereby optionally connecting said two skirt walls (3, 4), said wall part (14) optionally being shaped like a segment of a cylindrical ring and adapted to the circumferential shape of the piston top (2), and/or the height of said wall part (14) amounting to 5 to 25 %, preferably to 10 to 20 %, of the height of the skirt walls (3, 4) or of the height of the higher skirt wall (4), respectively, and/or **in that** the wall part (14) spans 30 to 70 %, preferably 40 to 60 %, of the distance between the lateral faces (21) of the skirt walls (3, 4) and/or **in that** the wall part (14) exposes the pin support (5, 6).

7. The piston according to any one of the claims 1 to 6, **characterised in that** the respective supporting walls (8) are disposed spaced apart from the pin support (5, 6) and/or **in that** the supporting wall (8) spans the distance between the two skirt walls (3, 4) in an unsupported way and/or **in that** the supporting walls (8) are exclusively connected to the skirt walls (3, 4) and are exclusively supported by them and/or are not connected to the pin support (5, 6).

8. The piston according to any one of the claims 1 to 7, **characterised in that** the supporting wall (8) and the skirt walls (3, 4) at the height of the supporting wall (8), or the skirt walls (3, 4) in their terminal areas, distal to the piston top and adjacent to the supporting wall (8), have a circular circumference.

9. The piston according to any one of the claims 1 to 8, **characterised in that** the opening (52) of the piston ring (50) is fixed in the circumferential area of one of the skirt walls (3, 4).

10. The piston according to any one of the claims 1 to 9, **characterised in that** the piston ring (50) is negatively pre-tensioned to have an oval shape, the pre-tension being reduced in the area of the ring opening (52), or compared to the pre-tension in the diametrically opposite ring area, respectively, especially being reduced by 10 to 30 %, and/or **in that** the piston ring (50) is radially reinforced or widened, respectively, in the area of its opening (52) and in the area (B) opposite its opening (52), the reinforcement optionally being continuously increased from the area having the smallest ring thickness (R) to a maximum value which exceeds the smallest ring thickness measured in a radial direction in the area (R) by 20 to 40 %, preferably by 25 to 35 %, and/or the respective radially widened area (B) of the piston ring (50) optionally spanning a central angle segment of 70 to 110°, especially of 80 to 190°.

11. The piston according to any one of the claims 1 to 10, **characterised in that** the piston ring (50) is placed in the ring groove (35) at a distance from the piston top (2) corresponding to 50 to 88 %, preferably of 60 to 88 %, of the piston height and/or in that the cross-section of the piston ring (50) is trapezoid, the longer of the parallel sides forming the outer circumference of the piston ring (50).

12. The piston according to any one of the claims 1 to 11, **characterised in that** a circumferential reinforcement (53) of the wall is formed on each of the inner sides of the skirt walls (2, 4) and the supporting walls (8) in the area of the ring groove (35), the height and width of said wall reinforcements (53) optionally exceeding the height or the depth of the ring groove (35), respectively, by about 50 to 200 %, preferably by 80 to 150 %.

13. The piston according to any one of the claims 1 to 12, **characterised in that** the outer circumference of the piston ring (50), which is inserted into the ring groove (35) and is not exposed to any external stress, is deviating from the circular form, with its end faces (54) meeting or being adjacent to each other, a diameter (D) passing through the end faces (54) or their joint, respectively, being larger than the diameter (D') extending vertically thereto, the difference of these two diameters exceeding the smallest ring thickness measured in a radial direction in the area (R) by about 40 to 80 %, preferably by 50 to 70 %.

14. A cylinder, especially for a two-stroke engine, with an associated piston or a piston borne therein, said piston (1) being formed according to any one of the claims 1 to 13.

15. The cylinder according to claim 14, **characterised in that** the overall circumferential surface of the piston ring (50) is adjacent to the cylinder's inner wall surface (54), which is especially circular, and/or the piston ring (50) is deformed by the cylinder's inner wall surface to become a ring with a circular outer diameter, and/or **in that** the piston ring (50) is fixed in the circumferential direction in its position on the piston and the radially widened portions of the piston ring are disposed in those areas of the cylinder's inner wall surface (54) where the outlet opening (25) and the inlet opening (27) are formed, and/or **in that** the joint of the piston ring (50) and the ring opening (52) are situated and fixed in front of the cylinder's inner wall surface (54) in which the inlet opening (27) is formed.

## Revendications

1. Piston, notamment pour des moteurs à deux temps, avec deux parois de jupe (3, 4) opposées, entre lesquelles se situe au moins une suspension à pointes (5, 6) soutenue par la tête de piston (2), chacune desdites parois de jupe (3, 4) s'étendant sur un secteur partiel de la circonférence du piston ou de la tête de piston (2), lesdites deux parois de jupe (3, 4) étant reliées par au moins une paroi de support (8) non-soutenue, de préférence en forme d'une bande, qui se situe à une position écartée de la tête de piston (2), **caractérisé en ce qu'**au moins une rainure circonférencielle (35), dans laquelle un segment de piston (50) est placé, est formée dans les deux parois de jupe (3, 4) et les parois de support (8).

2. Piston selon la revendication 1, **caractérisé en ce que** ladite paroi de support (8) a une courbure qui correspond à la courbure des parois de jupe (3, 4) et, de préférence, a la forme d'un secteur d'un anneau cylindrique.

3. Piston selon la revendication 1 ou 2, **caractérisé en ce que** l'une des parois de jupe (3) s'étend sur un angle (A) de 55 à 90°, de préférence de 60 à 80°, et/ou l'autre paroi de jupe (4), qui éventuellement est du même hauteur, s'étend sur un angle (B) de 90 à 115°, de préférence de 100 à 110°, le long de la circonférence ou le bord de la tête de piston (2) et lesdites parois sont moulées à la tête de piston (2).

4. Piston selon l'une des revendications 1 à 3, **caractérisé en ce qu'**un orifice (20) formé par le bord inférieur de la tête de piston (2), les faces latérales (21) des deux parois de jupe (3, 4) et la paroi de support (8) reliant lesdites parois de jupe (3, 4) expose la suspension à pointes (5, 6).

5. Piston selon l'une des revendications 1 à 4, **caractérisé en ce que** ladite paroi de support (8) se situe dans un domaine des parois de jupe (3, 4) qui se trouve à une hauteur qui correspond à une hauteur de 50 à 90 %, de préférence de 55 à 80 %, de la hauteur des parois de jupe (3, 4) ou de la hauteur de la paroi de jupe (4) plus haute, la hauteur étant mesurée de la tête de piston (2), et/ou que la hauteur de la paroi de support (8) correspond à 10 à 25 %, de préférence à 10 à 15 %, de la hauteur des parois de jupe (3, 4) ou de la hauteur de la paroi de jupe (4) plus haute.

6. Piston selon l'une des revendications 1 à 5, **caractérisé en ce qu'**une partie de paroi (14) qui s'étend le long de la circonférence du piston est formée latéralement à au moins une paroi de jupe (3, 4), ladite partie de paroi (14) s'étendant sur au moins une certaine partie de la distance entre les faces latérales (21) des deux parois de jupe (3, 4) et éventuellement reliant les deux parois de jupe (3, 4) l'une à l'autre, la partie de paroi (14) éventuellement ayant la forme d'un secteur d'un anneau cylindrique et étant adaptée à la forme de la circonférence de la tête de piston (2), et/ou la hauteur de la partie de paroi (14) étant de 5 à 25 %, de préférence de 10 à 20 %, de la hauteur des parois de jupe (3, 4) ou de la hauteur de la paroi de jupe (4) plus haute, et/ou que la partie de paroi (14) s'étend sur 30 à 70 %, de préférence 40 à 60 %, de la distance entre les faces latérales (21) des parois de jupe (3, 4) et/ou que la partie de paroi (14) expose la suspension à pointes (5, 6).

7. Piston selon l'une des revendications 1 à 6, **caractérisé en ce que** les parois de support (8) respectives sont situées écartées de la suspension à pointes (5, 6) et/ou que la paroi de support (8) s'étend sur la distance entre les deux parois de jupe (3, 4) d'une façon non-soutenue et/ou que les parois de support (8) sont exclusivement reliées aux parois de jupe (3, 4) et sont exclusivement soutenues par celles-ci et/ou ne sont pas reliées à la suspension à pointes (5, 6).

8. Piston selon l'une des revendications 1 à 7, **caractérisé en ce que** la paroi de support (8) et les parois de jupe (3, 4) au niveau de la paroi de support ou les parois de support (3, 4) dans leurs secteurs terminaux écartés de la tête de piston et adjacents à la paroi de support (8) ont une circonférence circulaire.

9. Piston selon l'une des revendications 1 à 8, **caractérisé en ce que** l'ouverture (52) du segment de piston (50) est fixée dans le domaine circonférenciel d'une des parois de jupe (3, 4).

10. Piston selon l'une des revendications 1 à 9, **caractérisé en ce que** le segment de piston (50) est négativement précontraint pour avoir une forme ovale, la précontrainte étant réduite dans le domaine de l'ouverture du segment (52) et par rapport à la contrainte dans le domaine diamétralement opposé du segment, notamment de 10 à 30 %, et/ou que le segment de piston (50) est radialement renforcé et élargi dans le domaine de son ouverture (52) et dans le domaine opposé à l'ouverture (52), le renforcement éventuellement augmentant de manière continue du domaine dans lequel l'épaisseur (R) du segment est le plus faible jusqu'à ce qu'il atteigne une valeur maximale qui dépasse l'épaisseur le plus faible, mesuré dans une direction radiale dans le domaine (R), de 20 à 40 %, de préférence de 25 à 35 %, et/ou le domaine (B) radialement élargi du segment de piston (50) s'étendant sur un angle au centre de 70 à 110°, de préférence de 80 à 190°.

11. Piston selon l'une des revendications 1 à 10, **caractérisé en ce que** le segment de piston (50) est disposé dans sa rainure (35) à une position écartée de la tête de piston (2) à une distance de 50 à 88 %, de préférence de 60 à 88 %, de la hauteur du piston et/ou que la section transversale du segment de piston (50) est trapézoïdale, la côté plus longue des côtés parallèles formant la circonférence extérieure du segment de piston (50).

12. Piston selon l'une des revendications 1 à 11, **caractérisé en ce qu'**un renforcement (53) des parois est formé sur la face intérieure de chacune des parois de jupe (3, 4) et des parois de support (8) dans le domaine de la rainure (35) pour le segment, la hauteur et l'épaisseur desdits renforcements (53) des parois éventuellement dépassant la hauteur et la profondeur de la rainure (35) pour le segment d'environ 50 à 200 %, de préférence de 80 à 150 %.

13. Piston selon l'une des revendications 1 à 12, **caractérisé en ce que** le segment de piston (50), qui est placé dans sa rainure (35) et n'est pas exposé à une charge extérieure, a une circonférence extérieur non-circulaire quand ses bouts se touchent ou sont adjacents, un diamètre (D) passant par les bouts (54) et leur aboutement étant plus grand qu'un diamètre (D') qui s'y étend verticalement, et la différence entre ces deux diamètres dépassant l'épaisseur le plus faible du segment, mesuré dans une direction radiale dans le domaine (R), d'environ 40 à 80 %, de préférence de 50 à 70 %.

14. Cylindre, notamment pour des moteurs à deux temps, avec un piston associé ou supporté dedans, ledit piston (1) étant formé selon l'une des revendications 1 à 13.

15. Cylindre avec un piston selon la revendication 14, **caractérisé en ce que** la surface circonférencielle entière du segment de piston (50) est adjacente à la surface intérieure (54) du cylindre, qui est notamment circulaire, et que le segment de piston (50) est déformé par la surface intérieure (54) du cylindre pour former un segment avec un diamètre extérieure circulaire, et/ou que le segment de piston (50) est fixé au piston dans la direction circonférencielle dans sa position et les domaines radialement élargis du segment de piston sont situés dans les domaines de la surface intérieure (54) du cylindre où l'ouverture de décharge (25) et l'ouverture d'entrée (27) sont formées et/ou que l'aboutement du segment de piston (50) et l'ouverture du segment (52) sont situés et fixés devant la surface intérieure (54) du cylindre, dans laquelle l'ouverture d'entrée (27) est formée.
